# EUROPEAN PATENT SPECIFICATION

(11) **EP 1 173 266 B1**
(45) Date of publication and mention of the grant of the patent: **11.06.2003**
(21) Application number: 00918671.9
(22) Date of filing: 20.04.2000
(51) Int. Cl.: B01D 17/032, E02B 15/04, B01D 21/24

(54) **EQUIPMENT FOR LIQUID SEPARATION**
FLÜSSIGKEITSABTRENNUNGSVORRICHTUNG
EQUIPEMENT POUR SEPARATION DE LIQUIDES

(30) Priority: 21.04.1999 CZ 928799 U
(43) Date of publication of application: 23.01.2002
(73) Proprietor: Koblizek, Jan, 664 64 Dolni Kounice (CZ)
(72) Inventor: Koblizek, Jan, 664 64 Dolni Kounice (CZ)
(74) Representative: Jeck, Anton, Dipl.-Ing.
(86) International application number: CZ0000028
(87) International publication number: WO00062887

(56) References cited:
- DE-A- 3 934 874
- DE-C- 412 334
- DE-U- 9 415 114
- GB-A- 1 212 222
- GB-A- 1 274 387
- US-A- 4 186 095
- US-A- 4 265 758
- US-A- 5 124 038

## Description

The invention relates to equipment for liquid separation, more specifically to equipment for separation of greasy liquids from a water surface.

### Background of the Invention

Contamination of a water surface by greasy liquids like crude oil and its products represents an ecology problem, the solution of which by conventional means results in further negative effects upon environment at the very place of the contamination or place where such a separation is performed. Greasy contaminants may often be trapped by merging walls, prevent further water flow or water surface contamination, but removal of the contaminants is significantly more difficult An application of absorption belts with consequent squeezing shows a little effect for a wide viscosity range of separated matters. Usually there are used chemical or mechanical means, binding and absorbing separated greasy liquids. Nevertheless the matter created by chemical separation procedures has to be mechanically removed from the water surface and later disposed of, mostly by deposition on a waste dump or by burning up. Already by the removal of a greasy matter from the water surface there comes to large contamination of the place, which is later left unattended. A remedy by a natural way proceeds very slowly and known artificial re-cultivation methods are very costly and decontaminated soil goes also to a waste dump. Waste dumps for such a purpose have to be designed respectively and maintained in a proper state, which is also costly. Furthermore these waste dumps represent a threat to the environment. From the paper US 4 186 095 there is known an apparatus for collecting pollution from a surface contaminated liquid. A layer of contaminated liquid is drawn into a rotating hollow rotor by virtue of a liquid vortex established therein. By a contact of the liquid with a stator there is reduced the rotational velocity of the boundary layer of polluted liquid, which is urged toward the vortex centre and drawn off through a collecting cavity located in the stator centre. A similar solution is known from US paper 5 124 038, describing an apparatus having vortex guide plate being in the centre furnished with collecting means opening downwards and comprising means for recovery of separated matter. Rotary impeller being concentric with the vortex plate is located under the collecting means. Both known solutions do not provide sufficient separation for a wide range of pollutants and also when thin layers are to be removed.

It is an object of the invention to design means for effective separation of liquids, which have different specific mass, do not mix mutually and form surface layers, more specifically for separation of water and greasy liquids.

It is a further object of the invention to prevent negative effects by removal of contaminants by means of chemicals.

### Disclosure of the Invention

The foregoing problems are solved and the set object achieved by an equipment for liquid separation in accordance with the invention, comprising the first vessel, the bottom of which is inclined with respect to a horizontal level, the first vessel having a sleeve passing through the vessel and accommodating a rotatable hollow shaft of a disk located plan-parallel with the vessel bottom outside surface, the disk being provided with at least two spiral blades, which are arranged at the disk surface remote to the vessel bottom and define chambers, each of the chambers opening tangentially to the disk and axially in a direction opposite to the disk position, and leading into one of channels provided for by axial baffles arranged in the hollow shaft. Each of the channels, the number of which corresponds to the number the chambers, opens by a first opening, passing through the hollow shaft wall, into the sleeve cavity, the hollow body of which is fumished with a second opening, spaced away from the first vessel bottom (2) and opening into the first vessel (1), the openings (12,13) communicating at a moment of coincidence during rotation of the hollow shaft (6) inside the sleeve (5). The number of channels in the shaft cavity corresponds to the number the chambers. Further in accordance with the present invention the first vessel is located in a second vessel, the one side wall of which is partially removed. Still further in accordance with the invention the second vessel is provided with float means. In the preferred embodiment the first vessel bottom is inclines with respect to a horizontal level by an angle in the range from 25 to 45 degrees.

According the above aspects of the invention there is provided an equipment allowing for separation of greasy liquids from water surface without any application of chemicals or absorption means causing environmental pollution or resulting in products polluting the area in close vicinity of the place of water contamination. Moreover the separated greasy liquid is not spoiled and may be returned to original purpose. The equipment as such is not demanding on space for operation. Another favourable feature of the invention is a wide range of greasy liquid separable by the equipment.

### Brief Description of the Drawings

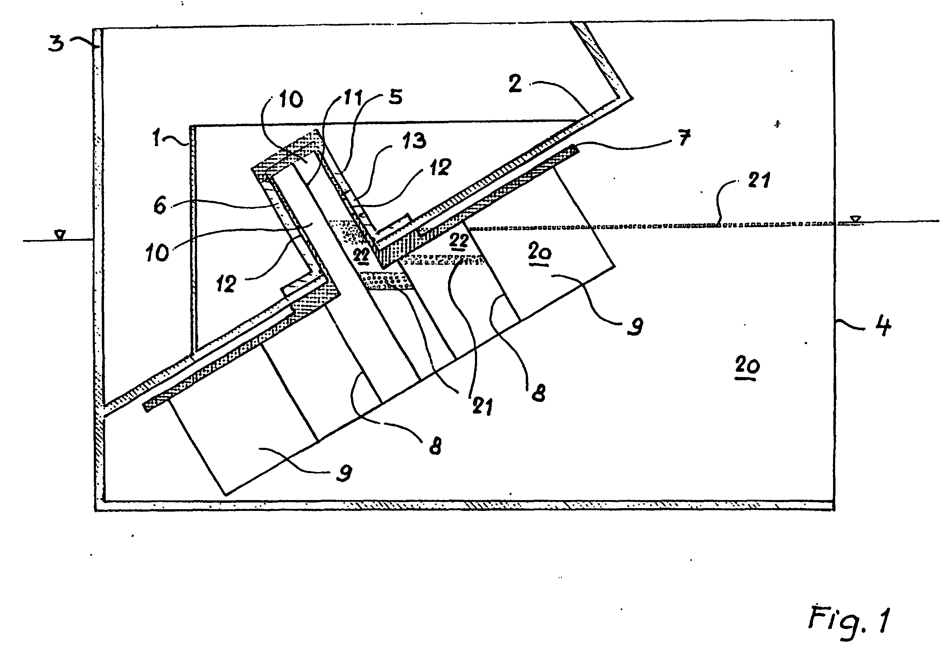

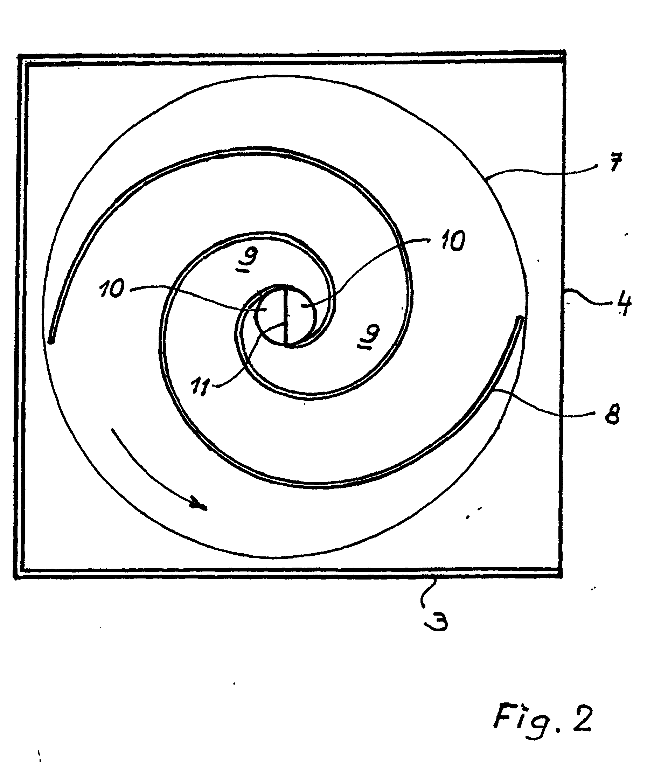

By way of an example the invention will be now described with reference to the accompanying drawings. Fig. 1 presents preferred embodiment of the invention in an elevation view in a longitudinal section and Fig. 2 shows front view on the chamber spiral blades.

### Description of Preferred Embodiments

Referring to Fig. 1, the equipment for liquid separation according the invention is provided with a stator and a rotor. The stator comprises a first vessel 1 having a bottom 2 showing 30° inclination with respect to a horizontal level. The first vessel 1 is accommodated in a second vessel 3, the side wall 4 of which is partially removed. Through the bottom 2 of the first vessel 1 there runs a hollow body of sleeve 5 rigidly connected with the first vessel 1. Inside the sleeve 5 there is located the rotor, comprising a hollow shaft 6, having a disk 7 attached at its free end. The disk 7 is located plane-parallel with the outside surface of the bottom 2 of the first vessel 1. On the disk 7, at the surface opposite the side adjacent to the first vessel 1 bottom 2, i.e. at the surface remote to the bottom 2 of the first vessel 1, there are arranged two spiral blades 8, defining two chambers 9 at the adjacent disk 7 surface.

Each of the chambers 9 opens tangentially to the disk 7, i.e. in the direction towards the disk 7 circumference, as well as axially in a direction opposite to the disk 7 position, i.e. downwards. Each of the chambers 9 further leads into one of two channels 10 provided for by an axial baffle 11 in the shaft 6 cavity.

The channels 10 open into the sleeve 5 cavity by a first opening 12, passing through the hollow shaft 6 wall. The sleeve 5 body is furnished with a second opening 13, opening into the first vessel 1 inside space. The first opening 12 and the second opening 13 are spaced from the first vessel 1 bottom 2 to enable coincidence of the first opening 12 with the second opening 13 during rotation of the shaft 6. The number of spiral chambers 9 may be even higher, but it always applies that the number of channels 10 within the shaft 6 cavity corresponds to the number the chambers 10.

Preferably the first vessel bottom 2 is inclined with respect to a horizontal level by an angle in the range from 25 to 45 degrees.

The rotor is preferably driven by an electric motor which is not shown at the drawings. The driving motor shaft is arranged co-axially with the rotor shaft 6 and is firmly attached to it.

Preferably the second vessel 3 is furnished with float means, facilitating the positioning of the equipment on the water surface. The second vessel 3 may constitute a part of a merging wall, preventing the contaminated surface water layer to escape. The shape of both vessels 1,3 is unimportant.

The equipment operates as follows. Rotating the rotor in the direction of the blade 8 curvature, as presented in Fig. 2, the water layer 20 carrying the surface layer of greasy liquid, like crude oil layer 21, is pumped into the chambers 9, while inside the chamber 9, above the crude oil layer 21, there remains an air cushion 22, forcing the excessive water quantity through the chamber 9 bottom back to the purified liquid. Within the radial channel 10 area the crude-oil layer 21 is forced upwards, toward the first opening 12, and at the moment of coincidence of the first and second openings 12,13, the crude-oil squirts into the inside space of the first vessel 1. It should be an easy affair to remove the separated greasy liquid from the first vessel 1 and transport it to a container. During the operation there are built multiple liquid and air layers in the radial channels 10. Air penetrates upwards creating pneumatic pulses forcing the greasy liquid through openings 12,13 into the inside space of the first vessel 1. Also the greasy liquid comprised in a bottom layer, due to pressure of inside chambers 9 and specific mass lower than water, is forced upwards above the water level. Therefore water is practically prevented from entering openings 12,13 and the first vessel 1.

The separation performance can be preferably increased by parallel multiple arrangement of the said equipment. The rate of efficiency of the separation may be improved by repeated procedure at the very location or later under laboratory conditions, when the speed of separation is not so important

### Industrial applications

The present invention is designed for mechanical separation of liquids which do not spontaneously constitute emulsion and manifest a difference in their specific mass at least 5 %, preferably for separation water from greasy liquids having specific mass at least 950 g/m³ and viscosity at least 2 mm²/s.

## Claims

1. Equipment for liquid separation, comprising a first vessel (1), the bottom (2) of which is inclined with respect to a horizontal level, the first vessel (1) having a sleeve (5) passing through the first vessel (1) and accommodating a rotatable hollow shaft (6) of a disk (7) located plan-parallel with the first vessel bottom outside surface, the disk (7) being provided with at least two spiral blades (8), which are arranged at the disk (7) surface remote to the first vessel bottom (2) and defining chambers (9), each of the chambers (9) opening tangentially to the disk (7) and axially in a direction opposite to the disk position, and leading into one of channels (10) provided for by axial baffles (11) built within the hollow shaft (6), wherein each of the channels (10), the number of which corresponds to the number the chambers (9), opens by an opening (12), passing through the hollow shaft (6) wall, into the sleeve (5) cavity, the hollow body of which is furnished with a second opening (13) spaced away from the first vessel bottom (2) and opening into the first vessel (1), the openings (12,13) communicating at a moment of coincidence during rotation of the hollow shaft (6) inside the sleeve (5).

2. Equipment according to claim 1, **characterised in, that** the first vessel (1) is located in a second vessel (3), the one side wall of which is partially removed.

3. Equipment according to claim 2, **characterised in, that** the second vessel (3) is provided with float means.

4. Equipment according to any of preceding claims, **characterised in, that** the first vessel (1) bottom (2) is inclined with respect to a horizontal level by an angle in the range from 25 to 45 degrees.

## Patentansprüche

1. Flüssigkeitstrennvorrichtung mit einem ersten Behälter (1), dessen Boden (2) in Bezug zur Horizontalen geneigt ist, der einen Hülsenkörper (5) aufweist, der durch den ersten Behälter (1) verläuft, und der an eine Hohlwelle (6) einer Scheibe (7) angepasst ist, die planparallel zur Außenseite des Bodens des ersten Behälters angeordnet ist und die mit mindestens zwei Spiralblättern (8) versehen ist, die auf der dem Boden (2) des ersten Behälters abgewandten Oberfläche der Scheibe (7) angeordnet sind und die Kammern (9) bilden, von denen jede tangential in die Scheibe (7) und axial in einer der Scheibenposition entgegengesetzten Richtung mündet und in einen Kanal von Kanälen führt, die durch axiale, in die Hohlwelle (6) eingebaute Trennwände (11) gebildet sind, wobei jeder der Kanäle (10), deren Anzahl der Anzahl der Kammern (9) entspricht, in eine Öffnung (12) mündet, die durch die Hohlwelle (6) in den Innenraum des Hülsenkörpers (5) führt, der mit einer zweiten Öffnung (13) versehen ist, die einen bestimmten Abstand vom Boden (2) des ersten Behälters hat und in diesen führt, und wobei sich die Öffnungen (12, 13) während der Drehung der Hohlwelle (6) im Hülsenkörper (5) zeitweise überdecken.

2. Flüssigkeitstrennvorrichtung nach Anspruch 1,
**dadurch gekennzeichnet,**
**dass** der erste Behälter (1) in einem zweiten Behälter (3) angeordnet ist, dessen eine Seitenwand teilweise entfernt ist.

3. Flüssigkeitstrennvorrichtung nach Anspruch 2,
**dadurch gekennzeichnet,**
**dass** der zweite Behälter (3) mit Schwimmmitteln versehen ist.

4. Flüssigkeitstrennvorrichtung nach einem der vorstehenden Ansprüche,
**dadurch gekennzeichnet,**
**dass** der Boden (2) des ersten Behälters (1) in Bezug zur Horizontalen um einen Winkel im Bereich von 25-45° geneigt ist.

## Revendications

1. Equipement de séparation de liquide comprenant une première cuve (1), dont le fond (2) est incliné par rapport à un niveau horizontal, la première cuve (1) ayant un manchon (5) passant par la première cuve (1) et logeant un arbre creux rotatif (6) d'un disque (7) parallèlement à la surface extérieure de la première cuve, le disque (7) étant proposé avec au moins deux lames en spirale (8), qui sont assemblées à la surface du disque (7) isolé du fond de la première cuve (2) et définissant des chambres (9), chacune de chambres (9) s'ouvrant de façon,tangentielle sur le disque (7) et de façon axiale dans le sens opposé de la position du disque, et menant à un des canaux (10) proposés à cet effet par des déflecteurs axiaux (11) conçus à l'intérieur de l'arbre creux (6), dans lequel chacun des canaux (10), dont le nombre correspond au nombre de chambres (9), s'ouvre par une ouverture (12), en passant par la paroi de l'arbre creux (6), dans la cavité du manchon (5), le corps creux duquel est pourvu d'une seconde ouverture (13) éloigné du premier fond de cuve (2) et une ouverture dans la première cuve (1), les ouvertures (12, 13) communiquant à un moment de coïncidence pendant la rotation de l'arbre creux (6) à l'intérieur du manchon (5).

2. Equipement selon la revendication 1 **caractérisé en ce que** la première cuve (1) est située dans une seconde cuve (3), dont une paroi latérale est partiellement enlevée.

3. Equipement selon la revendication 2 **caractérisé en ce que** la seconde cuve (3) est proposée avec un moyen de flotteur.

4. Equipement selon l'une quelconque des précédentes revendications **caractérisé en ce que** le fond (2) de la première cuve (1) est incliné par rapport à un niveau horizontal d'un angle entre 25 et 45 degrés.
